Europäisches Patentamt

European Patent Office

Office européen des brevets

(19)

(11) EP 1 469 361 A1

(12) EUROPEAN PATENT APPLICATION
published in accordance with Art. 158(3) EPC

(43) Date of publication:
20.10.2004 Bulletin 2004/43

(51) Int Cl.7: G03G 15/20, B29C 53/56

(21) Application number: 02793422.3

(86) International application number:
PCT/JP2002/013694

(22) Date of filing: 26.12.2002

(87) International publication number:
WO 2003/056396 (10.07.2003 Gazette 2003/28)

(84) Designated Contracting States:
AT BE BG CH CY CZ DE DK EE ES FI FR GB GR
IE IT LI LU MC NL PT SE SI SK TR

(30) Priority: 26.12.2001 JP 2001394856
28.06.2002 JP 2002191221

(71) Applicant: Japan Gore-Tex, INC.
Setagaya-ku Tokyo 156-8505 (JP)

(72) Inventors:
• Oyama, Shinro, c/o JAPAN GORE-TEX INC.
Tokyo 156-8505 (JP)
• Kikukawa, Hiroyasu, c/o JAPAN GORE-TEX INC.
Tokyo 156-8505 (JP)

(74) Representative: Müller-Boré & Partner
Patentanwälte
Grafinger Strasse 2
81671 München (DE)

(54) FLUORORESIN TUBE-LIKE MATERIAL

(57) There is described a fluororesin tubular product suitable for the surface layer of a fixing roll or a fixing belt for electrophotography. The tubular product of the present invention is a fluororesin tubular product formed by rolling, layering, and sticking a dense fluororesin film, wherein the number of rolling of the film is 2 or higher.

Fig.1

EP 1 469 361 A1

**Description**

**Technical Field**

The present invention relates to a tubular product made of a fluororesin, a fixing roll and a fixing belt using the tubular product, and a fixing apparatus using the fixing roll or the fixing belt.

**Background Art**

In an image forming apparatus such as an electrophotographic copying machine or a laser beam printer, image formation is carried out by the steps of: electrostatically charging a photosensitive drum uniformly; exposing to form an electrostatic latent image on the photosensitive drum; developing to make the electrostatic latent image visible with a toner; transferring the toner on the photosensitive drum to a transfer material; fixing the toner on the transfer material; and cleaning the toner remaining on the photosensitive drum after the transferring step.

In recent years, an electrophotographic image forming apparatus is required to improve the stability of the apparatus, assure high reliability, and save the cost of running for the purpose of making effective use of resources. As one of the measures to meet these requirements, a study has been made to stop, by the use of a wax toner, the supply of a release oil to the surface of a fixing member such as a fixing roll or a fixing belt; however, if the supply of a release oil is stopped, there occurs a problem that the surface layer of the fixing member is quickly worn out by its contact both with paper edges and with a temperature sensor. Further, along with an improvement in the speed of a copying machine and a laser printer, a load on the fixing member has been increased, for which reason it has become difficult to assure a long life of the fixing member.

Particularly, in a soft roll to be used for color image fixation, the effect of a release agent on the prevention of wear is significant. If a release agent is not supplied, scratching or wearing may take place in some cases on the surface layer of the soft roll only by printing on several hundred sheets, which layer is made of silicone rubber or fluororubber. Therefore, Journal of the Society of Electrophotography of Japan, vol. 33, no. 1 (1994) and Japanese Patent Publication No. 58-43740 proposes a fixing member produced by forming a silicone rubber elastic body as the outermost layer of a soft roll around a spindle and then covering it with a PFA tube as a release layer having a wear resistance. However, the PFA tube is not satisfactory in the wear resistance required along with an improvement in the speed of an electrophotographic apparatus and a tendency for oilless fixation in recent years, and therefore, it is required to thicken the release layer of the surface layer for the purpose of prolonging the life of the fixing member.

On the other hand, to obtain a color fixed image of high quality, it is important for the surface of a fixing roll to follow the irregularities on the surface of recording paper and to come in a uniform contact all over an unfixed toner image. If the fixing roll does not come in a uniform contact, the degree of toner melting becomes uneven in the unfixed toner image, resulting in an uneven luster of the fixed image and a deterioration of image quality. In general, fluororesins such as PFA have small elastic moduli as compared with silicone rubber and fluororubber, and the fluororesins are hardly strained, making it difficult to follow the irregularities on the surface of recording paper. When the outermost layer is formed of a fluororesin, it is important to make the outermost layer as thin as possible so that the roll surface becomes easy to follow the irregularities on the surface of recording paper.

Further, for the purpose of carrying out the image fixation of a color image at a high speed and reducing electric power consumption to a low level, it is preferred to decrease the heat capacity of a roll and the roll is required to have a high thermal conductivity. From such a viewpoint, it is also preferred to make the fluororesin layer as thin as possible.

When a belt type fixing apparatus is used, which comprises a fixing belt having a release layer formed on a belt made of a thin metal or a heat resistant resin such as polyimide and which further comprises a relatively long fixing nip part, the belt is required to have a lower heat capacity and a higher thermal conductivity. Therefore, even when a fluororesin layer is formed on such a fixing belt, it becomes important to make the fluororesin layer as thin as possible.

However, in general, a fluororesin tube made of PFA or PTFE, which has been used for the surface layer of a fixing roll or a fixing belt, is quite difficult to have a wall thickness of 25 $\mu$m or smaller from the viewpoint of forming. Therefore, for an improvement in image quality and a further energy saving, it is desired to develop a fluororesin release layer having a thickness of 25 $\mu$m or smaller. Further, with respect to the inner diameter of a tube, it is usually impossible to produce a tube having an inner diameter of 50 mm or greater from the viewpoint of forming, and therefore, there is another problem that fluororesin tubes cannot be applied to rolls of large diameter.

As described above, from the viewpoint of an improvement in image quality and an energy saving, it is advantageous to decrease the thickness of the release surface layer of a fixing member, and on the other hand, from the viewpoint of assuring a long life of the surface layer, in the case of a release surface layer presently made available, it is required to increase the thickness of the release surface layer. In recent years, there has been required a release surface layer which meets both of these contradictory requirements.

With respect to a method for the production of a fluororesin tube, some methods have been proposed so far; however, no methods meeting the above-described requirements have been developed yet. For example, a tube made of PTFE is particularly excellent in heat resistance and releasing property among fluororesin tubes, and therefore, it is most suitable for the release surface layer; however, PTFE has a high melt viscosity, and unlike ordinary thermoplastic resins, it cannot be formed by melt extrusion, and therefore, in general, the formation of PTFE is usually carried out by a paste extrusion method in which a PTFE powder and a liquid lubricant such as naphtha or xylene are uniformly blended and the thus obtained paste-like blend is extruded into a tubular shape, followed by extraction or drying to remove the liquid lubricant. However, when such a paste extrusion method is used, extrusion pressure becomes high, if a tube is made to have a small wall thickness, resulting in an uneven distribution of the wall thickness and a deterioration of appearance, and therefore, there is a limit to make the wall thickness small.

Japanese Patent Laid-Open (Kokai) Publication No. 50-136367 discloses a method for the production of a fluororesin tube of small wall thickness, comprising the steps of: applying a fluororesin coating material to a metal linear body and then baking the coating material to form a coating on the linear body; extending the coated linear body at least until the fluororesin coating loses its adhesive property to the linear body; and then pulling out the metal linear body. However, this method has problems that the evenness of wall thickness is hardly attained and the thus obtained tube is insufficient in wear resistance, strength, surface smoothness, and the like.

Japanese Patent Laid-Open (Kokai) Publication No. 4-296332 discloses a fluororesin tube of small wall thickness, which is made of a modified PTFE containing 0.02% to 0.4% by weight of perfluoroalkyl vinyl ether or hexafluoropropylene and which has a value of 300 or higher as calculated by dividing its inner diameter by its wall thickness. However, even with the use of this method, as the tube has a smaller wall thickness, the formation of pin holes and a decrease in strength occur more significantly, and there are some problems that: it is substantially difficult to obtain a tube having a wall thickness of 40 μm or smaller; it is also difficult to produce a tube of large diameter having an inner diameter of 60 mm or greater; and the heat resistance of the tube is decreased by the modification of PTFE.

It is an objective of the present invention to provide a fluororesin tubular product suitable for the surface layer of a fixing roll or a fixing belt for electrophotography; a fixing roll and a fixing belt using the tubular product as the surface layer; and a fixing apparatus comprising the fixing roll and the fixing belt.

**Disclosure of the Invention**

The present inventors have made an intensive study to solve the above-described problems, and as a result, they have completed the present invention.

Thus the present invention provides a tubular product, a fixing roll and a fixing belt for electrophotography, and further provides a fixing apparatus, as described below.

(1) A fluororesin tubular product formed by rolling, layering, and sticking a dense fluororesin film, wherein the number of rolling of the film is 2 or greater.
(2) The fluororesin tubular product as set forth in (1) above, wherein the film has a thickness of 20 μm or smaller.
(3) The fluororesin tubular product as set forth in (1) or (2) above, wherein the film is made of a dense polytetrafluoroethylene.
(4) The fluororesin tubular product as set forth in any one of (1) to (3) above, wherein the tubular product has the maximum wall thickness of 2 to 300 μm.
(5) The fluororesin tubular product as set forth in any one of (1) to (3) above, whereinthetubularproduct has the maximum wall thickness of 2 to 90 μm.
(6) The fluororesin tubular product as set forth in any one of (1) to (5) above, wherein the tubular product has a surface roughness (Ra) of 0.5 μm or lower.
(7) The fluororesin tubular product as set forth in any one of (1) to (6) above, wherein the tubular product has a tensile strength of 80 N/mm$^2$ or higher.
(8) The fluororesin tubular product as set forth in any one of (1) to (7) above, wherein the tubular product has a light transmittance of 35% to 95% to light having a wavelength of 500 nm.
(9) The fluororesin tubular product as set forth inanyoneof (1) to (8) above, wherein the tubular product has an inner surface subjected to surface treatment for the improvement of adhesion property.
(10) A fixing roll comprising, as a surface layer, the fluororesin tubular product as set forth in any one of (1) to (9) above, wherein the film has a thickness of 0.1 to 20 μm and the tubular product has the maximum wall thickness of 2 to 90 μm.
(11) Afixingbelt comprising, as a surface layer, the fluororesin tubular product as set forth in any one of (1) to (9) above, wherein the film has a thickness of 0.1 to 20 μm and the tubular product has the maximum wall thickness of 2 to 90 μm.
(12) A fixing apparatus comprising the fixing roll as set forth in (10) above.

(13) A fixing apparatus comprising the fixing belt as set forth in (11) above.

**Brief Description of Drawing**

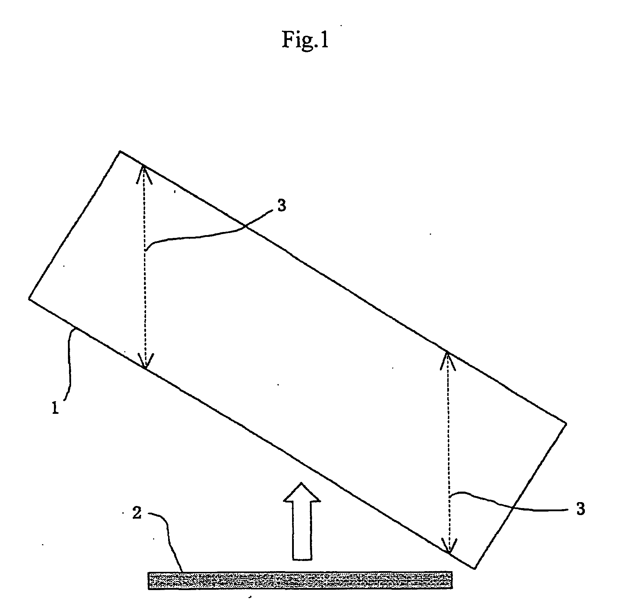

Figure 1 shows a drawing for the explanation of a method for spirally rolling a belt-like fluororesin film on a spindle.

In Figure 1, numeral **1** indicates a belt-like fluororesin film; numeral **2**, a spindle; and numeral **3**, a length corresponding to the distance of rolling.

**Best Mode for Carrying out the Invention**

The tubular product of the present invention is produced from a fluororesin film with a dense structure as a material by rolling, layering, and sticking the fluororesin film. As the fluororesin film, there can be used a polytetrafluoroethylene (PTFE) film, a tetrafluoroethylene-perfluoroalkyl vinyl ether copolymer (PFA) film, a tetrafluoroethylene-hexafluoropropylene copolymer (FEP) film, each of which has a dense structure. With respect to the PFA and FEP, since they are thermofusible, thin films each having a thickness of 10 µm or smaller can easily be produced by an extrusion inflation method, a casting method, or the like. The thus obtained fluororesin film has a dense structure and a high smoothness (Ra being 0.5 µm or lower). With respect to the PTFE, it is quite difficult to produce a film having a thickness of 50 µm or smaller by a skiving method which is usually used as a method for the production of a PTFE film. However, it is possible to produce a dense thin film having a thickness of 10 µm or smaller by a method for producing a stretched porous PTFE (ePTFE) film by hot press. Since the dense PTFE film produced by this method has been subjected to a stretching step, as compared with the PTFE film produced, for example, by a skiving method, the dense PTFE film has not only a high tensile strength and a high wear resistance but also excellent properties such as a high surface smoothness and a high light transmittance (a high transparency).

As the fluororesin film to be used in the present invention, the dense PTFE film produced by hot press of the ePTFE film is particularly preferred because it is excellent in heat resistance, releasing property, strength, wear resistance, and the like.

The ePTFE film is obtained by removing a forming aid from a formed body of a paste obtained by mixing a PTFE fine powder and the forming aid; stretching the resulting formed body at a high temperature and a high speed; and then, if necessary, baking the formed body. In the case of uniaxial stretching, nodes (folded crystals) are formed like narrow islands at right angles to the direction of stretching, and fibrils (straight chain molecular bundles formed by loosening and pulling out the folded crystals by the stretching) are oriented in the direction of stretching just like a reed screen for connection between the nodes. Thus the film has a fibrous structure having voids in the spaces between the neighboring fibrils or in the spaces defined by the fibrils and the nodes. In the case of biaxial stretching, fibrils are spread radially, and nodes exist like islands connecting the fibrils. Thus the film has a fibrous structure just like a cobweb having a large number of spaces defined by the fibrils and the nodes.

The ePTFE film, although it may be a uniaxially stretched ePTFE film or a biaxially stretched ePTFE film, is preferably a biaxially stretched ePTFE film. The biaxially stretched ePTFE film has a lower anisotropy than that of the uniaxially stretched ePTFE film because of stretching in two different directions. The biaxially stretched ePTFE film can provide a PTFE film having high values of strength both in the TD direction (in the widthwise direction of the film) and in the MD direction (in the lengthwise direction of the film).

The ePTFE film to be preferably used in the present invention has a porosity of 10% to 95%, preferably 40% to 90%.

The porosity is calculated by the following equation from the apparent density (ρ) measured according to the apparent density measurement method of JIS K 6885 (the same holds in the following).

$$\text{Porosity (\%)} = (2.2 - \rho) / 2.2 \times 100 \qquad \text{(a)}$$

The stretch ratio in the TD direction is 100% to 5000%, preferably 100% to 2000%, whereas the stretch ratio in the MD direction is 100% to 5000%, preferably 100% to 2000%. The ratio of values of tensile strength in the lengthwise direction and in the widthwise direction of a dense film obtained from the ePTFE film can be adjusted by the stretch ratios in the TD direction and in the MD direction for the ePTFE film. For example, in the case of a dense film produced by using, as a material film, an ePTFE film produced on the conditions that the stretch ratio is 1200% in the TD direction and 600% in the MD direction, the tensile strength of the dense film in the direction corresponding to the TD direction of the ePTFE film becomes about two times as high as that of the dense film in the direction corresponding to the MD direction of the material film.

To produce a dense PTFE film as a material film for forming the tubular product of the present invention, at first, the ePTFE film is compressed (pressurized) at a temperature lower than the melting point in the first compression step to obtain a rolled film. At this time, the compression temperature is not particularly limited, if it is lower than the melting point of PTFE; it is usually lower than the melting point by a temperature difference of 1°C or more, preferably 100°C or more. If the compression temperature is higher than or equal to the melting point, the dense film shrinks significantly. The compression conditions are adjusted so that the thus obtained film has a porosity of 50% or lower, preferably 20% or lower, and more preferably 10% or lower. The compression pressure is usually 0.5 to 60 N/mm$^2$, preferably 1 to 50 N/mm$^2$, in terms of surface pressure. The compression apparatus is not particularly limited, if it can achieve the compression of a film. Preferably used are those which can compress a film by allowing the film to pass between rolls or belts, such as a calender roll apparatus or a belt press apparatus. If a calender roll apparatus, or belt press apparatus is used, air contained in the inside of an ePTFE film and air existing between the layers of an ePTFE film can easily be pushed out to the outside of the ePTFE film when the film is sandwiched between rolls or belts, so that there can be obtained a dense film free from voids (those which can be detected by surface observation (at a magnification of 2000 times) with a scanning electron microscope (SEM); the same holds in the following) and free from wrinkles.

The thickness of an ePTFE film, although it depends on the thickness of the desired film, the porosity of the ePTFE film, and the like, is usually 3 to 500 μm, preferably 5 to 200 μm.

The thickness is as measured with a 1/1000 mm dial thickness gauge manufactured by Technolock on the condition that no load is applied, except the spring load of the main body (the same holds in the following).

The rolled film obtained in the first compression step is then compressed (pressurized) at a temperature higher than or equal to the melting point of PTFE in the second compression step. At this time, the compression temperature is not particularly limited, if it is higher than or equal to the melting point of PTFE. The compression temperature is usually higher than the melting point by 1°C to 100°C, preferably 20°C to 80°C. The dense film can have an improved surface smoothness by heating the ePTFE film at a temperature higher than or equal to the melting point. The compression temperature is preferably decreased to a temperature lower than the melting point at the time of releasing the pressure. If the pressure is released at a temperature higher than or equal to the melting point, the dense film shows significant shrinkage and easily causes wrinkling. The compression conditions are adjusted so that the thus obtained dense film has a porosity of 10% or lower, preferably 1% or lower. The compression pressure is usually 0.1 to 100 N/mm$^2$, preferably about 1 to 30 N/mm$^2$, in terms of surface pressure. The compression apparatus is not particularly limited, if it can achieve compression while sandwiching a film. The use of a hot press apparatus or a belt press apparatus is preferred, which can apply heat and pressure to the film for a prescribed period of time.

The dense film can be produced by one press with an apparatus which can heat the ePTFE film at a temperature higher than or equal to the melting point of PTFE while compressing the film and which can then cool the film to a temperature lower than or equal to the melting point of PTFE while maintaining the pressure. According to this method, even if the ePTFE film is heated at a temperature higher than or equal to the melting point of PTFE from the starting of the compression, the ePTFE film is cooled to a temperature lower than the melting point of PTFE before the pressure applied to the ePTFE film is released, so that the thus obtained dense film can cause almost no shrinkage.

For example, if a belt press apparatus is used, a dense film with a little shrinkage can be obtained by heating the ePTFE film at a temperature higher than or equal to the melting point of PTFE while compressing the film between belts, and then cooling the film to a temperature lower than the melting point. Moreover, this method is preferred because the dense film can be produced in a continuous manner.

The PTFE film with a dense structure, which is obtained in such a manner as described above, may have a thickness appropriately selected depending on the applications thereof, although the thickness thereof is not particularly limited. When the tubular product of the present invention is used for the surface layer of a fixing roll or fixing belt, the PTFE film has a thickness of 0.1 to 20 μm, preferably 1 to 10 μm, and the PTFE film has a surface roughness (Ra) (as measured according to JIS B 0601) of 0.1 μm or lower, preferably 0.05 μm or lower. The PTFE film has a high tensile strength (as measured according to JIS K 7127 with a No. 2 specimen at a test speed of 50 mm/min and expressed in terms of the values in the lengthwise direction and in the widthwise direction), which is usually 80 N/mm$^2$ or higher, preferably 100 N/mm$^2$ or higher.

The PTFE film has both a dense structure and a high surface smoothness, so that it has an excellent light transmitting property and has a high light transmittance (as measured with a spectrophotometer, UV-240, manufactured by Shimadzu Corporation) of 80% or higher, particularly 90% or higher, to light having a wavelength of 500 nm, as measured in terms of transmittance to visible light having a wavelength of 500 nm.

When the first compression step is carried out, compression control may be carried out in two or more steps for the purpose of decreasing the number of voids in the film to be produced. Further, in the second compression step, when a hot press apparatus is used, at the time of compression with a hot press plate, a heat resistant film having a high surface smoothness may be inserted between the hot press plate and the film, followed by heating and compression. When a belt press apparatus is used, a heat resistant film having a high surface smoothness may be inserted between the belt made of a metal and the film, followed by heating and compression. At this time, a heat resistant polyimide film or the like may be used as the heat resistant film. According to this method, the thus obtained dense PTFE film can have the same surface roughness (Ra) as that of the heat resistant film, which is effective when the hot press plate or the belt made of a metal cannot have a high surface smoothness.

According to the above-described method, a transparent PTFE thin film having a thickness of $50\,\mu m$ or smaller, which has been difficult to produce by a skiving method, can easily be obtained. For example, an ePTFE film having a porosity of 80% and a thickness of $40\,\mu m$ is compressed with a calender roll (at a roll temperature of $70^\circ C$) to lower the porosity to 2% and the thickness to $12\,\mu m$, and the film is then pressed with a belt press apparatus on the conditions that the press plate temperature is $320^\circ C$ to $400^\circ C$, the pressure is $10.0\ N/mm^2$, the feeding speed is 0.5 to 2.0 m/min, and the press time is 0.5 to 10 minutes, to give a thin film having a porosity of 0% and a thickness of $10\,\mu m$. Further, an ePTFE film having a porosity of 85% and a thickness of $9\,\mu m$ is subjected to the same process to give a thin film having a porosity of 0% and a thickness of $2\,\mu m$.

When heat press is carried out with a press plate in the second compression step, the surface roughness (Ra) of the PTFE film to be obtained in such a manner as described above depends on the surface roughness (Ra) of the plate, and when compression is carried out with a hot press plate for the rolled film obtained in the first compression step while the film is sandwiched between heat resistant films, the surface roughness (Ra) of the PTFE film to be obtained depends mainly on the surface roughness (Ra) of the heat resistant films. For example, when a press plate subjected to mirror finish treatment to have a surface roughness (Ra) of $0.1\,\mu m$ or lower is used for the hot press, the surface roughness (Ra) of the PTFE film to be obtained also becomes $0.1\,\mu m$ or lower. In a similar manner, when polyimide films each having a high surface smoothness (having an Ra of $0.01\,\mu m$) are used as release films for sandwiching the rolled film obtained in the first compression step between the top and bottom release films, the surface roughness (Ra) of the PTFE film to be obtained also becomes about $0.01\,\mu m$.

According to the above-described method, a transparent PTFE film can be obtained, whether thin or thick. In this method, an ePTFE film as a material film is compressed in the first compression step and then compressed in the second compression step, both in the same manner as described above. At this time, as the ePTFE film, an ePTFE film having properties similar to those of the ePTFE film described above and having a large thickness, for example, an ePTFE film having a thickness of greater than $400\,\mu m$, usually $400\,\mu m$ to 1 mm, may be used. The material film may be a single film or a laminate film obtained by laminating 2 to 100 films, preferably 2 to 20 films.

A PTFE film with a dense structure having a thickness of greater than $20\,\mu m$ and a high transparency can be obtained from such a thick ePTFE film. For example, a PTFE film having a porosity of 0% and a thickness of $50\,\mu m$ and having a high transparency and a luster in the surface thereof can be obtained from a laminate film having a total thickness of $450\,\mu m$, which is produced by laminating three ePTFE films each having a porosity of 70% and a thickness of $150\,\mu m$. The PTFE film has a light transmittance of 80% or higher, preferably 85% or higher, and has a porosity of 10% or lower, preferably 2% or lower. The PTFE film has a surface roughness (Ra) of $0.1\,\mu m$ or lower, preferably $0.05\,\mu m$ or lower. Since the film is a PTFE film having a high transparency and a high tensile strength, it can be used for various applications, for example, protection films for construction materials, as a PTFE film having a heat resistance, a weather resistance, a chemical resistance, a wear resistance, and an excellent releasing property.

In the above-described method, the use of an ePTFE film having a high tensile strength can provide a PTFE film having a high tensile strength. For example, the use of an ePTFE film having a tensile strength of 10 to 100 $N/mm^2$ can provide a PTFE film having a tensile strength of 50 to 200 $N/mm^2$. A conventional PTFE cut film produced by a skiving method usually has a tensile strength of 20 to 50 $N/mm^2$, and a conventional PTFE cast film has a tensile strength of about 20 to 40 $N/mm^2$. As compared with these conventional PTFE films, the dense PTFE film obtained in such a manner as described above has an extremely high tensile strength.

The PTFE film will be further described in details. The film has a specific gravity of 2.0 or higher, which is observed to have no voids, no pin holes, or no fibril structure by surface observation (at a magnification of 2000 times) withascanningelectronmicroscope (SEM). The film is a transparent film with a uniform appearance by visual observation, which is observed to have no white opaque parts or no white stripes caused by remaining voids, pin holes, or fibril structure.

The PTFE film has an extremely high transparency and an excellent designing property, whereas no conventional PTFE films have such a high transparency.

The tubular product of the present invention can be produced by rolling, layering, and sticking the fluororesin film with a dense structure. In the tubular product, the adhesion of rolled neighboring layers may be carried out by heat bonding or using an adhesive layer. The tubular product of the present invention can be produced by rolling a fluororesin film in the prescribed number of rolling around a spindle made of SUS, heat bonding the rolled neighboring layers of the fluororesin film by heating and baking at a temperature higher than or equal to the melting point of the fluororesin, and then removing the spindle made of SUS. The tubular product of the present invention can also be produced by rolling a fluororesin film coated with an adhesive on one surface thereof in the prescribed number of rolling around a spindle made of SUS, heating the film, if necessary, sticking the rolled neighboring layers of the fluororesin film, and then removing the spindle made of SUS. The method of rolling is not particularly limited, if it can layer the fluororesin film into a tubular shape; for example, a fluororesin film may be rolled like a Sushi-roll, or a belt-like fluororesin film may be rolled spirally.

Figure 1 shows a drawing for the explanation of a method for rolling a belt-like fluororesin film spirally.

In Figure 1, numeral **1** indicates a belt-like fluororesin film; numeral **2**, is a spindle (a rod) ; and numeral **3**, a length corresponding to the distance of rolling on the spindle; the number of rolling is a value calculated by dividing the length with the outer diameter of the spindle.

As shown in Figure 1, belt-like fluororesin film **1,** while slanting to spindle **2**, is rolled around the spindle, so that a tubular product can be obtained by spirally rolling the fluororesin film.

Further, a plurality of fluororesin films may be successively rolled. For example, a first fluororesin film is rolled in one or more laps around a spindle, and a second fluororesin film is rolled in one or more laps further on the first fluororesin film around the spindle to give a tubular product.

In such a tubular product, when an adhesive is used for sticking the rolled neighboring layers, the adhesive may be applied to the inner surface of the fluororesin film. On the other hand, when the rolled neighboring layers are stuck by heat bonding, heating and baking may be carried out at a temperature higher than or equal to the melting point of the fluororesin after the completion of the rolling.

When a tubular product is produced by rolling, layering, and sticking a fluororesin film in such a manner as described above, the end of the film forming the outermost layer exists on the outer surface of the tubular product to be obtained, at which end of the film a step is formed. Further, if the position of the end at which the rolling of a film is started (the leading end) is not completely corresponding to the position of the end at which the rolling of the film is finished (the terminating end) , a difference in the wall thickness of the tube is caused at the ends of the film. For example, when a fluororesin film is rolled in the number of rolling of [n to n + 1], there are formed two regions, i.e., a region (a thinner portion) in which the wall thickness of the tube consists of n layers and a region (a thicker portion) in which the wall thickness of the tube consists of n + 1 layers, both neighboring at the end of the fluororesin film in the outermost layer forming the outer surface of the tube. A difference in the wall thickness of the tube can be eliminated, if the position of the leading end is completely corresponding to the position of the terminating end; however, in the practical production, a difference in position between the leading end and the terminating end occurs because of variation, resulting in a difference in the wall thickness of the tube.

The study of the present inventors has found the following fact. When a step and a difference in thickness are significant, the obtained tube is unsatisfactory as the surface layer material for a fixing roll or a fixing belt. In the case of the fixing roll or the fixing belt using the tube as the surface layer, a difference in surface temperature between the thinner portion and the thicker portion becomes significant at the time of a fixing step with an actual electrophotographic apparatus, and differences in color and in luster in a printed image become so significant as to be observed by visual observation. In contrast, if the number of rolling of the film is 2 or greater, preferably 3 or greater, a difference in temperature between the thinner portion and the thicker portion becomes insignificant, and differences in color and in luster in a printed image are reduced to such a level that they cannot be observed by visual observation.

In the present invention, the number of rolling is 2 or greater, preferably 3 or greater, of which upper limit is, although it is not particularly limited, about 100.

Further, the trace of a step in the thickness of a fluororesin film existing at the end of the fluororesin film on the outer surface of a tube occurs like a line on a printed image. In order to reduce the occurrence of such a line trace, it is effective to make small the thickness of the fluororesin film. If the thickness of the fluororesin film is greater than 20 μm, the line trace clearly occur on a printed image. On the other hand, if the thickness is 20 μm or smaller, usually 15 μm or smaller, and particularly 10 μm or smaller, the line trace becomes rather invisible. If the thickness of the film is 2 μm or smaller, the line trace can hardly be observed by visual observation. When the film has a small thickness, the number of rolling is increased to give a great wall thickness of the tube, so that a long life of the fixing material can be assured. For example, a PTFE film tube (having a wall thickness of about 18 to 24 μm) in which the PTFE film has a thickness of 6 μm and the number of rolling is 3.5, and a PTFE film tube (having a wall thickness of about 20.4 to 21.3 μm) in which the PTFE film has a thickness of 1.7 μm and the number of rolling is 12.5 have approximately the same durability. Smaller numbers of rolling of the fluororesin film are more advantageous from the viewpoint of production costs.

For example, a PTFE film produced by heat press of an ePTFE film can have a thickness of 1 to 500 μm, in which the number of rolling can be increased to about 100 laps. Therefore, the present invention can provide various PTFE film tubes with optional combinations of the thickness of the PTFE film and the number of rolling.

When the tubular product of the present invention is used for the surface layer of a fixing roll or a fixing belt, the thickness of a fluororesin film to be rolled is 0.1 to 20 μm, preferably 1 to 10 μm, and more preferably 1.5 to 6 μm. The number of rolling of the film is 2 to 50, preferably 3 to 30, and more preferably 3 to 20. The wall thickness of the tube may appropriately be determined depending on the required properties such as a wear resistance and a heat capacity, which are required on the basis of conditions such as a speed and a nip pressure of a fixing apparatus. The thickness of the thicker portion (the maximum wall thickness) is 2 to 90 μm, preferably 4 to 50 μm, and more preferably

5 to 30 μm. If the maximum wall thickness is smaller than 2 μm, no sufficient strength can be obtained and handling at the time of production becomes difficult. If the maximum wall thickness is greater than 90 μm, it becomes difficult to follow the irregularities on the surface of recording paper and the heat capacity of the fixing roll becomes high.

The tube has a surface roughness (Ra) (as measured according to JIS B 0601; the same holds in the following) of 0. 5 μm or lower, preferably 0.3 μm or lower, and more preferably 0.2 μm or lower. If the Ra is 0.5 μm or higher, the releasing property of toner becomes insufficient and the pressure to toner becomes uneven, resulting in a deterioration of image quality. Further, if voids (bubbles) remain in the tube wall, the temperature of the roll surface becomes uneven, resulting in a deterioration of image quality. Therefore, as a tube to be used for the surface layer of a fixing roll, tubes having both a high surface smoothness and a dense structure containing no voids are preferred, and as a result, tubes having a high light transmittance are desired.

When the fluororesin tubular product of the present invention is a dense PTFE tubular product using a dense PTFE film produced by heat press of an ePTFE film, the tubular product has a high tensile strength (as measured according to JIS K 7127 with a No. 2 specimen (the specimen is produced by cutting the tube open) at a test speed of 50 mm/min. and expressed in terms of an average of the values in the lengthwise direction and in the widthwise direction; the same holds in the following), which is usually 80 N/mm$^2$ or higher, preferably 100 N/mm$^2$ or higher. Further, the dense PTFE tubular product has both a dense structure and a high surface smoothness, so that the tubular product has an excellent light transmitting property and has a light transmittance of 35% to 95% (asmeasured with a spectrophotometer, UV-240, manufactured by Shimadzu Corporation) to light having a wavelength of 500 nm, as measured in terms of transmittance to visible light having a wavelength of 500 nm (the same holds in the following). If the light transmittance is lower than 35%, the dense PTFE film may contain voids in some cases, and the presence of voids makes thermal conductivity uneven at the time of image fixation, causing uneven melting of toner. If the light transmittance is lower than 35%, Ra of the tube becomes higher than 0.5 μm because of voids or wrinkles of the surface, and therefore, the toner releasing property becomes insufficient or the application of pressure to the toner becomes uneven, resulting in a deterioration of image quality.

The tubular product of the present invention is preferably used for the surface layer material of a fixing roll or a fixing belt, as described above; however, it is not limited to these applications and it can find use in various applications, for example, a guiding tube of an endoscope, a catheter, a gas-liquid separation membrane, an insulating cable coating material, a hose, an artificial blood vessel, an optical fiber for pneumatic process, a liquid transfusion pipe, and the like. When the tubular product of the present invention is used for applications other than fixing rolls or fixing belts, the wall thickness thereof is not particularly limited and appropriately selected depending on the applications. In general, the tubular product has a wall thickness of 2 to 300 μm, preferably 5 to 100 μm, in terms of the maximum wall thickness. The inner diameter of the tubular product is also appropriately determined depending on the applications, which is usually 5 to 150 mm, preferably 20 to 70 mm.

When the tubular product of the present invention is used for the surface layer material of a fixing roll, the inner diameter thereof is usually about 20 to 70 mm, and the maximum wall thickness thereof is 2 to 90 μm, preferably 4 to 50 μm, and more preferably 5 to 30 μm.

When the tubular product of the present invention is used for the surface layer material of a fixing belt, the inner diameter thereof is usually about 30 to 150 mm, and the maximum wall thickness thereof is 2 to 90 μm, preferably 4 to 50 μm, and more preferably 5 to 30 μm.

When a tubular product made of a fluororesin film with a dense structure is produced according to the present invention, the fluororesin film with a dense structure is rolled, layered, and stuck into a tubular shape. For example, in the case of a dense PTFE film, as a preferredmethod for rolling, layering, and sticking the PTFE film into a tubular shape, there is a method by rolling the PTFE film in a plurality of laps around a spindle made of a metal, heating the rolled product in an oven at a temperature higher than or equal to the melting point of PTFE, cooling the rolled product in air, and then removing the PTFE film surrounding the spindle made of a metal. This method makes it possible to obtain a dense PTFE tube with a layer structure like a Sushi-roll. At this time, the surface of the spindle may previously be roughened by sand blast processing or the like in order to improve the releasing property from the PTFE tube. The thus obtained PTFE tube is free from the entrainment of air in neighboring layers, so that the respective layers are completely stuck to the next layers, of which adhesion strength is as high as a cohesion failure occurs in the PTFE film at the time of delamination. In addition, one surface or both surfaces of the PTFE film may previously be subjected to conventionally known surface treatment such as corona discharge treatment, chemical etching treatment, or excimer laser treatment, so that a sufficiently high interlayer adhesion strength can be obtained by heating for a shorter period of time and a heat deterioration of the PTFE film can be suppressed. When an ordinary plastic film is formed into a tubular shape in the same manner, there occur problems that some amount of air is entrained between the layers of the rolled film to make interlayer adhesion uneven and gaps remain between the layers after heat treatment. Further, if an ordinary thermofusible plastic is heated to a temperature higher than or equal to the melting point, the plastic is melted and fluidized, so that the thickness thereof easily becomes uneven and the surface thereof is roughened because of swelling by heat, and so that the plastic adheres to the spindle made of a metal and becomes difficult to remove. Therefore, as compared with PFA and FEP, both of which are thermofusible fluororesins, PTFE can easily be formed. A PTFE film has two characteristics: (1) the film is hardly fluidized even at a melting point of PTFE; and (2) the film has a gas permeability. Therefore, the present inventors have found that if a PTFE film is rolled around a spindle made of a metal and heated to a temperature higher than or equal to the melting point of PTFE, air entrained in the film layers can be released without causing an unevenness of thickness or an unevenness of adhesion between the neighboring film layers and that a tube in which the respective layers are completely stuck to one another can easily be formed.

The dense PTFE tubular product of the present invention can be subjected to conventionally known surface treatment on the inner surface thereof, such as corona discharge treatment, chemical etching treatment, and excimer laser treatment, for the purpose of improving the adhesion property of the inner surface of the PTFE tube. For example, after chemical etching with Tetra H (manufactured by Junkosha Inc. ) , the tubular product may be used for producing a fixing roll or a fixing belt having the surface layer of a PTFE tube according to a conventional method. The tube surface subjected to chemical etching may cause a coloration or give a fine cracking structure in some cases; however, this is no problem for use as the surface layer of a fixing roll.

Two directions are available as a direction for assembling the fluororesin tube of the present invention on a fixing roll to the direction of rotation of a fixing roll: a direction of inserting the fluororesin tube into a nip part from the thicker portion to the thinner portion in this order; and a direction of inserting the fluororesin tube into a nip part from the thinner portion to the thicker portion in this order. With respect to seam line traces to be formed on a printed image, or differences in color and in luster corresponding to the thinner portion and the thicker portion of the surface layer of the fixing roll, they occur at approximately the same levels in both directions of insertion; however, the direction of insertion into a nip part from the thicker portion to the thinner portion in this order is preferred because of an advantageous effect on the tearing of the surface layer.

**Examples**

The present invention will hereinafter be further described in details by way of Examples.

**Example 1**

A dense PTFE film (10 $\mu$m in thickness, 550 mm in width $\times$ 175 mm in length) subjected to corona discharge treatment on one surface thereof was rolled, like a Sushi-roll, in 2.1 laps around a spindle made of SUS (26.5 mm in outer diameter and 500 mm in length) in such a manner that the corona treated surface was in the inner side. At this time, the filmwas rolled in the lengthwise direction, and the end of the film was fixed with ring-like stoppers so that the film did not shrink in the axial direction of the spindle made of SUS. The film was then baked at 400°C in an oven for 30 minutes and cooled in air, after which the stoppers were detached and a PTFE tubular product was removed from the spindle made of SUS to obtain a dense PTFE tubular product having the maximum wall thickness of 30 $\mu$m (20 $\mu$m in the thickness of the two-layer portion and 30 $\mu$m in the thickness of the three-layer portion) and an inner diameter of 26.5 mm. The dense PTFE tubular product had an Ra of 0.340 $\mu$m, a tensile strength of 120 N/mm$^2$, and a light transmittance of 75% to light having a wavelength of 500 nm.

Example 2

A dense PTFE tubular product having the maximum wall thickness of 28 $\mu$m and an inner diameter of 26.5 mm was obtained in the same manner as described in Example 1, except that a dense PTFE film (4 $\mu$m in thickness and 550 mm in width $\times$ 540 mm in length) subjected to corona discharge treatment on one surface thereof was rolled, like a Sushi-roll, in 6.5 laps around a spindle made of SUS (26.5 mm in outer diameter and 500 mm in length) in such a manner that the corona treated surface was in the inner side. The dense PTFE tubular product had an Ra of 0.200 $\mu$m, a tensile strength of 130 N/mm$^2$, and a light transmittance of 80% to light having a wavelength of 500 nm.

Example 3

A dense PTFE tubular product having the maximum wall thickness of 27 $\mu$m and an inner diameter of 26.5 mm was obtained in the same manner as described in Example 1, except that a dense PTFE film (1.7 $\mu$m in thickness and 550 mm in width $\times$ 1290 mm in length) subjected to corona discharge treatment on one surface thereof was rolled, like a Sushi-roll, in 15.5 laps around a spindle made of SUS (26.5 mm in outer diameter and 500 mm in length) in such a manner that the corona treated surface was in the inner side. The dense PTFE tubular product had an Ra of 0.080 $\mu$m, a tensile strength of 150 N/mm$^2$, and a light transmittance of 80% to light having a wavelength of 500 nm.

Example 4

A dense PTFE tubular product having the maximum wall thickness of 7 μm and an inner diameter of 26.5 mm was obtained in the same manner as described in Example 1, except that a dense PTFE film (1.7 μm in thickness and 550 mm in width × 291 mm in length) subjected to corona discharge treatment on one surface thereof was rolled, like a Sushi-roll, in 3.5 laps around a spindle made of SUS (26.5 mm in outer diameter and 500 mm in length) in such a manner that the corona treated surface was in the inner side. The dense PTFE tubular product had an Ra of 0.080 μm, a tensile strength of 140 N/mm$^2$, and a light transmittance of 88% to light having a wavelength of 500 nm.

Example 5

A dense PTFE tubular product having the maximum wall thickness of 27 μm and an inner diameter of 45 mm was obtained in the same manner as described in Example 1, except that a dense PTFE film (1.7 μm in thickness and 550 mm in width × 2190 mm in length) subjected to corona discharge treatment on one surface thereof was rolled, like a Sushi-roll, in 15.5 laps around a spindle made of SUS (45 mm in outer diameter and 500 mm in length) in such a manner that the corona treated surface was in the inner side. The dense PTFE tubular product had an Ra of 0.100 μm, a tensile strength of 150 N/mm$^2$, and a light transmittance of 80% to light having a wavelength of 500 nm.

Example 6

A dense PTFE tubular product having the maximum wall thickness of 7 μm and an inner diameter of 100 mm was obtained in the same manner as described in Example 1, except that a dense PTFE film (1.7 μm in thickness and 777 mm in width × 800 mm in length) subjected to corona discharge treatment on one surface thereof was rolled in 3.5 laps around a spindle made of SUS (100 mm in outer diameter and 500 mm in length) in such a manner that the spindle axis and the lengthwise direction of the film were kept at 45° to each other. The dense PTFE tubular product had an Ra of 0.250 μm, a tensile strength of 140 N/mm$^2$, and a light transmittance of 88% to light having a wavelength of 500 nm.

Example 7

The PTFE tube produced in Example 1 was impregnated on the inner surface thereof with a Na/naphthalene complex salt solution (trade name: Tetra H, manufactured by Junkosha Inc. ) at 25°C, and then immersed in methanol, water, and methanol in this order for 10 seconds each, and dried by blowing air to the inner and outer surfaces thereof. A primer (trade name: DY 39-051, manufactured by Toray Dow Corning Co., Ltd.) was applied to the thus treated inner surface of the tube, which was then attached to an inner wall of a mold for forming a roll having an inner diameter of 27.5 mm. An aluminum spindle (25 mm in outer diameter and 320 mm in length) was held in the center of the mold. Silicone rubber was injected between the tube and the aluminum spindle, and then thermally hardened at 150°C for 30 minutes, followed by secondary vulcanization at 200°C for 4 hours, to obtain a fixing roll having a dense PTFE film as the surface layer thereof.

Example 8

A fixing roll having a dense PTFE film as the surface layer thereof was obtained in the same manner as described in Example 7, except that the PTFE tube produced in Example 2 was used.

Example 9

A fixing roll having a dense PTFE film as the surface layer thereof was obtained in the same manner as described in Example 7, except that the PTFE tube produced in Example 3 was used.

Example 10

A fixing roll having a dense PTFE film as the surface layer thereof was obtained in the same manner as described in Example 7, except that the PTFE tube produced in Example 4 was used.

Comparative Example 1

A fixing roll was obtained in the same manner as described in Example 7, except that a PFA tube (STM,

**EP 1 469 361 A1**

manufactured by Gunze Ltd.) having a wall thickness of 30 µm was used.

Comparative Example 2

A dense PTFE tubular product having the maximum wall thickness of 20 µm and an inner diameter of 26.5 mm was obtained in the same manner as described in Example 1, except that a dense PTFE film (10 µm in thickness and 550 mm in width × 125 mm in length) subjected to corona discharge treatment on one surface thereof was rolled in 1.5 laps around a spindle made of SUS (26.5 mm in outer diameter and 500 mm in length) in such a manner that the corona treated surface was in the inner side. The thus obtained tubular product was used to produce a fixing roll having the dense PTFE film as the surface layer thereof in the same manner as described in Example 7.

Each of the fixing rolls obtained in Examples 7 to 10 and Comparative Examples 1 and 2 was mounted in an electrophotographic printer (DocuPrint C2220, manufactured by Fuji Xerox Co., Ltd. ) and paper feeding evaluation was carried out to compare the occurrence of tearing of the surface layer. The results are shown in Table 1. As can be seen, when the dense PTFE tubular products obtained in Examples according to the present invention were used for the surface layers of the fixing rolls, a remarkably high wear resistance was obtained as compared with that of Comparative Example 1 using a conventional PFA tube.

TABLE 1

|  | Ex. 7 | Ex. 8 | Ex. 9 | Ex. 10 | Comp. Ex. 1 | Comp. Ex. 2 |
|---|---|---|---|---|---|---|
| Number (K) of paper sheets fed until surface layer was torn out. | 220 | >300 | >300 | 150 | 80 | 180 |

Each of the fixing rolls obtained in Examples 7 to 10 and Comparative Example 2 was mounted in an electrophotographic printer (DocuPrint C2220, manufactured by Fuji Xerox Co., Ltd.) and image output was carried out to compare the trace (in a line-like state) at the film end of the surface layer appearing on the image. The results are shown in Table 2. As can be seen, when the dense PTFE tubular products obtained in Examples according to the present invention were used for the surface layers of the fixing rolls, the trace at the film end of the surface layer was more hardly formed, if the dense PTFE film used for rolling and layering had a smaller thickness.

TABLE 2

|  | Ex. 7 | Ex. 8 | Ex. 9 | Ex. 10 | Comp. Ex. 2 |
|---|---|---|---|---|---|
| Trace at film end of surface layer | Appearing in line-like state | Slightly appearing | Not appearing | Not appearing | Appearing in line-like state |

Each of the fixing rolls obtained in Examples 7 to 10 and Comparative Example 2 was mounted in an electrophotographic printer (DocuPrint C2220, manufactured by Fuji Xerox Co., Ltd.) and image output was carried out to evaluate a difference in luster between the portions divided by the trace at the film end of the surface layer appearing on the image. The results are shown in Table 3. As can be seen, when the dense PTFE tubular products obtained in Examples according to the present invention were used for the surface layers of the fixing rolls, a difference in luster was caused between the portions divided by the trace at the film end of the surface layer, if the number of rolling of the dense PTFE film used for rolling and layering was 1.5. This is because if the number of rolling was smaller than 2, a difference in the wall thickness of the dense PTFE tubular product became significant, resulting in an uneven degree of toner melting.

TABLE 3

|  | Ex. 7 | Ex. 8 | Ex. 9 | Ex. 10 | Comp. Ex. 2 |
|---|---|---|---|---|---|
| Difference in luster between portions divided by trace of film end of surface layer | No difference in luster | No difference in luster | No difference in luster | No difference in luster | Difference in luster |

Each of the fixing rolls obtained in Examples 7 to 10 and Comparative Examples 1 and 2 was mounted in an electrophotographic printer (DocuPrint C2220, manufactured by Fuji Xerox Co., Ltd.) and image output was carried out to compare the unevenness of luster in a solid image. The results are shown in Table 4. As can be seen, if the tubular product used for the surface layer of the fixing roll had a small wall thickness, the luster in the solid image hardly became uneven.

TABLE 4

|  | Ex. 7 | Ex. 8 | Ex. 9 | Ex. 10 | Comp. Ex. 1 | Comp. Ex. 2 |
|---|---|---|---|---|---|---|
| Unevenness of luster in solid image | Uneven luster | Uneven luster | Uneven luster | Even luster | Uneven luster | Uneven luster |

As describe above, the present invention makes it possible to provide a tubular product suitable for a fixing member for electrophotography which has a high durability and which can attain a high image quality and a reduction in energy consumption, the tubular product having been difficult to obtain in the prior art.

**Claims**

1. A fluororesin tubular product formed by rolling, layering, and sticking a dense fluororesin film, wherein the number of rolling of the film is 2 or greater.

2. The fluororesin tubular product according to claim 1, wherein the film has a thickness of 20 µm or smaller.

3. The fluororesin tubular product according to claim 1 or 2, wherein the film is made of a dense polytetrafluoroethylene.

4. The fluororesin tubular product according to any one of claims 1 to 3, wherein the tubular product has a maximum wall thickness of 2 to 300 µm.

5. The fluororesin tubular product according to any one of claims 1 to 3, wherein the tubular product has a maximum wall thickness of 2 to 90 µm.

6. The fluororesin tubular product according to any one of claims 1 to 5, wherein the tubular product has a surface roughness (Ra) of 0.5 µm or lower.

7. The fluororesin tubular product according to any one of claims 1 to 6, wherein the tubular product has a tensile strength of 80 N/mm$^2$ or higher.

8. The fluororesin tubular product according to any one of claims 1 to 7, wherein the tubular product has a light transmittance of 35% to 95% to light having a wavelength of 500 nm.

9. The fluororesin tubular product according to any one of claims 1 to 8, wherein the tubular product has an inner surface subjected to surface treatment for improvement of adhesion property.

10. A fixing roll comprising, as a surface layer, the fluororesin tubular product according to any one of claims 1 to 9, wherein the film has a thickness of 0.1 to 20 µm and the tubular product has a maximum wall thickness of 2 to 90 µm.

11. A fixing belt comprising, as a surface layer, the fluororesin tubular product according to any one of claims 1 to 9, wherein the film has a thickness of 0.1 to 20 µm and the tubular product has a maximum wall thickness of 2 to 90 µm.

12. A fixing apparatus comprising the fixing roll according to claim 10.

13. A fixing apparatus comprising the fixing belt according to claim 11.

Fig.1

# EP 1 469 361 A1

## INTERNATIONAL SEARCH REPORT

| | International application No. |
|---|---|
| | PCT/JP02/13694 |

### A. CLASSIFICATION OF SUBJECT MATTER
Int.Cl⁷ G03G15/20, B29C53/56

According to International Patent Classification (IPC) or to both national classification and IPC

### B. FIELDS SEARCHED
Minimum documentation searched (classification system followed by classification symbols)
Int.Cl⁷ G03G15/20, B32B1/08, B29D22/00, B29C53/56

Documentation searched other than minimum documentation to the extent that such documents are included in the fields searched

| Jitsuyo Shinan Koho | 1922–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 7-205274 A (Canon Kabushiki Kaisha), 08 August, 1995 (08.08.95), Full text; Figs. 1 to 19 (Family: none) | 1-7,9-13 |
| Y | US 5944930 A (Canon Kabushiki Kaisha), 31 August, 1999 (31.08.99), Full text; Figs. 1 to 30 & JP 8-187773 A | 1-7,9-13 |
| Y | JP 10-207268 A (Showa Electric Wire & Cable Co., Ltd.), 07 August, 1998 (07.08.98), Full text (Family: none) | 3,6,7 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 March, 2003 (17.03.03) | 01 April, 2003 (01.04.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

14

**EP 1 469 361 A1**

<table>
<tr><td colspan="2">INTERNATIONAL SEARCH REPORT</td><td>International application No.<br>PCT/JP02/13694</td></tr>
</table>

C (Continuation). DOCUMENTS CONSIDERED TO BE RELEVANT

| Category* | Citation of document, with indication, where appropriate, of the relevant passages | Relevant to claim No. |
|---|---|---|
| Y | WO 00/69623 A1 (Kaneka Corp.),<br>23 November, 2000 (23.11.00),<br>Full text; Figs. 1 to 64<br>& EP 1193047 A1 | 9 |

Form PCT/ISA/210 (continuation of second sheet) (July 1998)